# EUROPÄISCHE PATENTSCHRIFT

(11) **EP 1 199 146 B1**
(45) Veröffentlichungstag und Bekanntmachung des Hinweises auf die Patenterteilung: **09.02.2005**
(21) Anmeldenummer: 01124640.2
(22) Anmeldetag: 16.10.2001
(51) Int. Cl.: B29C 37/04, B23C 3/12

(54) **Vorrichtung zum Bearbeiten der Schweissraupen an einem aus Kunststoffprofilen zusammengeschweissten Rahmen**
Device for treatment of weld beads on a frame made of welded plastic profiles
Dispositif de traitement des bavures de soudage d'un cadre formé à partir de profilés en matière plastique connectés par soudage

(30) Priorität: 19.10.2000 DE 10051947
(43) Veröffentlichungstag der Anmeldung: 24.04.2002
(73) Patentinhaber: WILLI STÜRTZ MASCHINENBAU GmbH, D-53577 Neustadt (DE)
(72) Erfinder: Stürtz, Karl-Heinz, 53577 Neustadt (DE)
(74) Vertreter: Kossobutzki, Walter, Dipl.-Ing.(FH)

(56) Entgegenhaltungen:
- DE-A- 3 019 600
- DE-A- 4 138 501
- DE-A- 4 219 088
- DE-A- 4 237 939
- DE-U- 9 208 557

## Beschreibung

Die Erfindung bezieht sich auf eine Vorrichtung zum Bearbeiten der Schweißraupen an den Schweißstellen eines aus Kunststoffprofilen zusammengeschweißten Rahmens, insbesondere eines Fensterrahmens, bestehend aus einem Maschinengestell mit einem eine Führungsleiste für den Rahmen aufweisenden Transport- und Arbeitstisch, mindestens einem Anschlag mit mindestens einem den Rahmen in seiner Bearbeitungslage sichernden Spannelement sowie aus einem oberen und einem unteren , bewegbaren Werkzeugträger mit unterschiedlichen und in ihrer Bearbeitungslage einstellbaren Bearbeitungswerkzeugen.

Bei der Herstellung von Fensterrahmen aus Kunststoff werden Profilstäbe aus Kunststoff unter Gehrung auf eine vorgegebene Länge zugeschnitten und an ihren Enden miteinander verschweißt. Bedarfsweise werden in Fensterrahmen auch sogenannte Kämpfer eingesetzt, die entweder spitzwinklig oder trapezförmig angeschlossen sind. Auch der Einsatz von kreuzförmigen Kämpfern ist möglich. Nach dem Zusammenschweißen der Profilstäbe müssen dann die überstehenden Schweißraupen zumindest an den Sichtflächen entfernt werden, was durch unterschiedliche Bearbeitungwerkzeuge erfolgt. Als Bearbeitungswerkzeuge werden beispielsweise ein Scheibenfräser, ein Inneneckmesser, ein Schattennutmesser, ein Messer für eine schräge Innenecke, ein Messer für einen hohen, versetzten Rahmen, ein Kämpfermesser und, je nach Bedarf, ein Fräser für eine Dichtungsnut und ein Winkelbohrkopf verwendet. Alle Bearbeitungswerkzeuge werden von Werkzeughaltern aufgenommen, die, meist mit Ausnahme des Scheibenfräsers, auf einem gemeinsamen Werkzeugträger angeordnet sind. Über die Werkzeughalter werden die einzelnen Bearbeitungswerkzeuge in ihrer Ausgangslage für die Bearbeitung bewegt, während die eigentliche Arbeitsbewegung durch eine entsprechende Bewegung des Werkzeugträgers erfolgt.

Derartige Bearbeitungsvorrichtungen sind beispielsweise aus der DE 9 208 557 U1 und der DE 4 237 939 A1 bekannt. Um nun die Ecke eines Fensterrahmens gleichzeitig von oben und von unten bearbeiten zu können, sind immer ein oberer und ein unterer Werkzeugträger vorgesehen. In Abhängigkeit von der Zeit, in der die Schweißraupen eines Fensterrahmens bearbeitet werden müssen, werden entweder zwei oder alle vier Ecken eines Fensterrahmens gleichzeitig bearbeitet. Bei der Verwendung von sogenannten Kämpfern sind auch deren Schweißnähte zusätzlich zu bearbeiten. Mit den vorbekannten Vorrichtungen kann jedoch eine trapezförmig verlaufende Schweißnaht eines eingesetzten Kämpfers an ihrer parallel zu einer Außenkante des Fensterrahmens verlaufenden Schweißnaht nicht bearbeitet werden. Darüber hinaus machen es die bekannten Bearbeitungsvorrichtungen für Schweißraupen immer dann, wenn nicht alle vier Ecken des Fensterrahmens gleichzeitig bearbeitet werden, erforderlich, den Fensterrahmen um 180° zu drehen. Darüber hinaus ist es bei den vorbekannten Vorrichtungen verhältnismäßig aufwendig, die einzelnen Bearbeitungswerkzeuge in ihre Bearbeitungsposition zu bringen und den Bearbeitungsvorgang durchzuführen. Auch die Bearbeitung von kleinen Fensterrahmen ist problematisch. Da der Raum, in dem sich die Bearbeitungswerkzeuge und der Werkzeugträger bewegen, immer frei sein muß, ist die Anordnung von Anschlägen und Auflagern für das Ausrichten und das Festspannen des Fensterrahmens an den eigentlich benötigten Stellen meist nicht möglich.

Der Erfindung liegt deshalb die Aufgabe zugrunde, eine Vorrichtung zum Bearbeiten der Schweißraupen an den Schweißstellen eines aus Kunststoffprofilen zusammengeschweißten Rahmens, insbesondere eines Fensterrahmens zu schaffen, die einen einfachen Aufbau besitzt, kurze Bearbeitungszeiten ermöglicht, die Bearbeitung aller an einem Rahmen vorhanden Schweißnähte zuläßt und die darüber hinaus im Bearbeitungsbereich einen aufsreichenden Freiraum für die Bewegung der Bearbeitungswerkzeuge besitzt.

Zur Lösung dieser Aufgabe wird gemäß Anspruch 1 bei einer Vorrichtung der eingangs beschriebenen Gattung vorgeschlagen, dass in dem Maschinengestell mindestens eine horizontale und sich auf einem Kreisbogen über einen Winkel von mindestens 90° erstreckende Führung ausgebildet ist, dass sich der Mittelpunkt der Kreisbogen-Führung um ein vorgegebenes Maß innerhalb des Rahmens in der Bearbeitungsstellung befindet, dass an der Führung ein mittels eines Antriebes in einen Winkel von 45° bis 135° zu einer Führungskante des Rahmens schwenkbarer Schlitten gesichert ist und dass der Schlitten zumindest einen mit den Bearbeitungswerkzeugen bestückten Werkzeugträger radial zur Kreisbogen-Führung verschiebbar aufnimmt.

Durch diese erfindungsgemäße Ausgestaltung der Bearbeitungsvorrichtung ist eine Bearbeitung der unterschiedlichst ausgestalteten Rahmen möglich. Die Vorrichtung besitzt einen einfachen, kostengünstigen Aufbau und im Bearbeitungsbereich einen verhältnismäßig großen Freiraum. Die Bearbeitungszeiten mit der erfindungsgemäßen Vorrichtung sind verhältnismäßig kurz, was kurze Taktzeiten für die Bearbeitung des Rahmens mit sich bringt.

Weitere Merkmale einer Vorrichtung gemäß der Erfindung sind in den Ansprüchen 2 bis 7 offenbart.

Die Erfindung wird nachfolgend anhand in einer Zeichnung in stark vereinfachter Weise dargestellter Ausführungsbeispiele näher erläutert. Dabei zeigen
- Fig. 1: eine Draufsicht auf eine Vorrichtung gemäß der Erfindung und
- Fig. 2: eine doppelt, spiegelbildlich zueinander angeordnete Vorrichtung der Fig. 1.

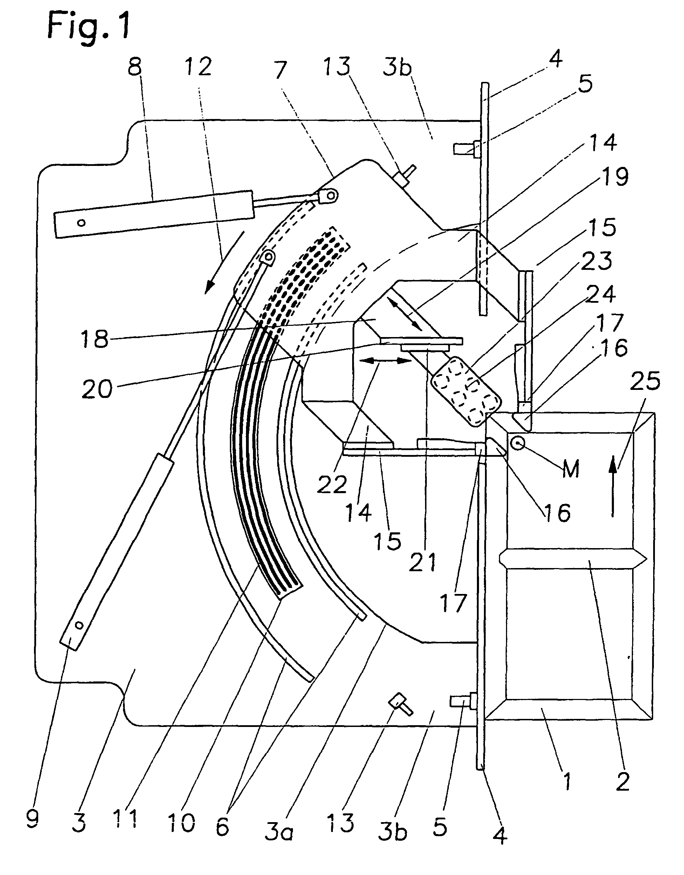

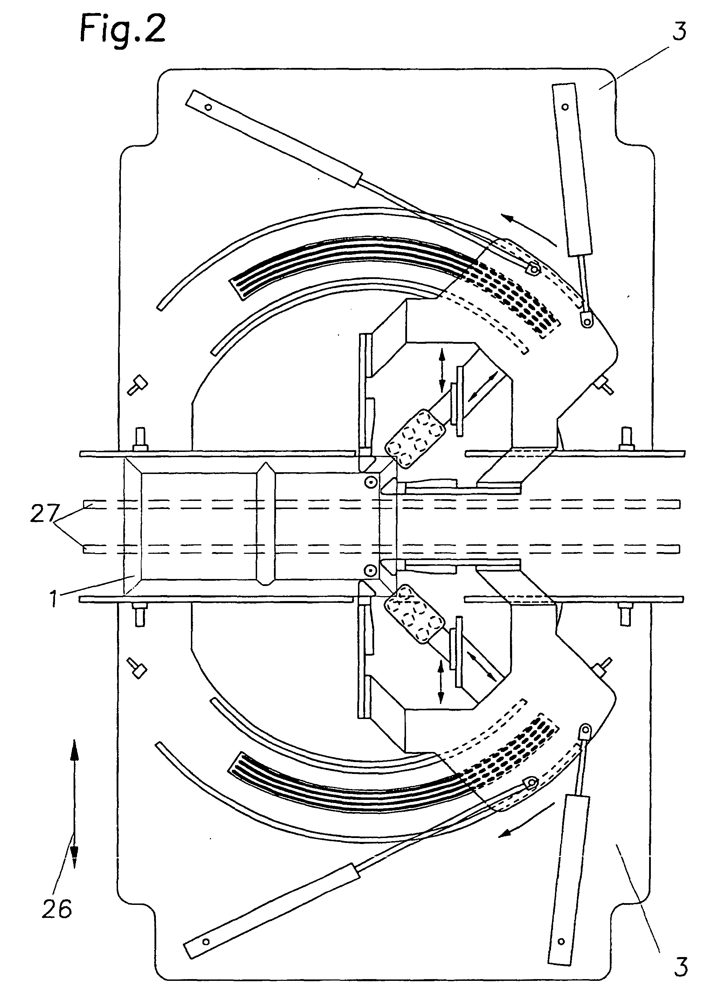

In den Figuren 1 und 2 der Zeichnung ist jeweils ein Fensterrahmen 1 in horizontaler Lage und damit in Draufsicht gezeigt, der aus vier unter 45°-Gehrung auf Länge zugeschnittenen Profilstäben aus Kunststoff gebildet ist und zusätzlich einen sogenannten Kämpfer 2 aufweist. Dieser Kämpfer 2 besitzt in der Zeichnung, obwohl dies in der Praxis so eigentlich nicht vorkommt, an einem Ende einen spitzwinkligen und am anderen Ende einen trapezförmigen Anschluß. Zur Bearbeitung aller Schweißraupen, insbesondere an den Sichtflächen dieses Rahmens 1 dienen die in der Fig. 1 und 2 dargestellten Vorrichtungen.

Die Vorrichtung gemäß Fig. 1 kann immer nur eine Ecke eines Rahmens 1 bearbeiten und besteht zunächst aus einem Maschinengestell, von dem lediglich eine horizontale Tragplatte 3 gezeigt ist. Diese Tragplatte 3 weist eine etwa rechteckige Grundfläche auf und ist an ihrer in der Fig. 1 rechts befindlichen Seite mit einer etwa halbkreisförmigen Ausnehmung 3a versehen. An dem dadurch entstandenen Schenkeln 3b der Tragplatte 3 ist jeweils eine Führungsleiste 4 vorgesehen. Beiden Führungsleisten 4 ist jeweils mindestens ein Stellantrieb 5 zugeordnet, über den die Führungsleisten 4 in eine genau vorgegebene, fluchtende Position bewegt werden können. Diese Führungsleisten 4 werden in Abhängigkeit von der Art der Bearbeitung des Rahmens 1 voreingestellt.

Im dargestellten Ausführungsbeispiel befindet sich auf der Oberseite der Tragplatte 3 eine auf einem Kreisbogen verlaufende Führung 6, die im dargestellten Ausführungsbeispiel aus zwei mit Abstand voneinander angeordneten Führungsschienen gebildet ist. Diese Führung 6 erstreckt sich über einen Winkel von mindestens 90° und ist so angeordnet, dass sie unter einem Winkel von 45° bis 135° zu einer Führungskante des Rahmens 1 und damit zu den Führungsleisten 4 verläuft. Diese Führung 6 nimmt, sowohl horizontal als auch vertikal geführt, einen Schlitten 7 auf, der auf der Führung 6 um einen Winkel von maximal 90° geschwenkt werden kann. Die Schwenkbewegung erfolgt um die Achse M, die sich immer innerhalb des zu bearbeitenden Rahmens 1 befindet. Für diese Schwenkbewegung sind im dargestellten Ausführungsbeispiel zwei Kolbenzylindereinheiten 8, 9 vorgesehen, die auf der Tragplatte 3 schwenkbar befestigt sind und an unterschiedlichen Punkten des Schlittens 7 angreifen. Diese Kolbenzylindereinheiten 8, 9 werden pneumatisch beaufschlagt. Die Beaufschlagung der Kolbenzylindereinheiten 8,9 wird von einer Steuerbahn 10 gesteuert, die im dargestellten Ausführungsbeispiel vier Steuerkurven 11 besitzt. Von diesen vier Steuerkurven 11 dient eine Steuerkurve 11 dazu, zu erkennen, in welcher Stellung bzw. Endstellung sich der Schlitten 7 befindet. Jeweils eine Steuerkurve 11 ist einer Kolbenzylindereinheit 8, 9 zugeordnet, während die vierte Steuerkurve 11 zur Umkehr der Beaufschlagung der Kolbenzylindereinheiten 8, 9 dient. Bei der Bewegung des Schlittens 7 aus der gezeichneten Lage in Richtung des Pfeiles 12 werden zunächst die beiden Kolbenzylindereinheiten 8, 9 auf Zug beansprucht. Während der Schwenkbewegung des Schlittens 7 erfolgt dann zunächst eine Schubumkehr der Kolbenzylindereinheit 8 und dann der Kolbenzylindereinheit 9, bevor der Schlitten 7 dann eine um 90° gedrehte Lage erreicht hat. Zur Abtastung der Steuerkurve 11 sind beispielsweise an der Unterseite des Schlittens 7 an sich bekannte, jedoch in der Zeichnung nicht dargestellte Tastschalter vorgesehen. Die jeweilige Endlage des Schlittens 7 ist durch Anschläge 13 begrenzt, die einstellbar ausgebildet sein können. Bedarfsweise können zusätzlich auch Endlagendämpfer vorgesehen sein. Falls es erforderlich sein sollte, kann der Schlitten 7 auch in einer um 45° geschwenkten Lage angehalten werden. Dazu müßte dann auch ein nicht dargestellter Anschlag vorgesehen sein, der bedarfsweise in die Bewegungsbahn des Schlittens 7 bewegt wird.

An dem Schlitten 7 sind zwei unter einem Winkel von 90° verlaufende Arme 14 vorgesehen, die an ihren freien Enden jeweils eine Leiste 15 tragen. Am freien Ende der Leisten 15 befindet sich jeweils ein Auflager 16 und ein Anschlag 17. Dabei sind die Auflager 16 so angeordnet, dass sie den Rahmen 1 beim Festspannen durch nicht gezeichnete Spannelemente stützend aufnehmen können. Diese Spannelemente können dabei auch an den Leisten 15 vorgesehen sein. Die Anschläge 17 sind höheneinstellbar an den Leisten 15 befestigt. Von den beiden Anschlägen 17 ist normalerweise immer nur ein Anschlag 17 ausgefahren und begrenzt die Bewegung des Rahmens 1 ein. Der andere Anschlag 17 befindet sich dann in einer zurückgezogenen, unwirksamen Stellung. Bedarfsweise können die Anschläge 17 auch einstellbar ausgebildet sein.

An dem Schlitten 7 sind zwei senkrecht zur Zeichnungsebene mit Abstand voneinander angeordnete Balken 18 in Richtung des Doppelpfeiles 19 verschiebbar angeordnet, wobei die Verschiebung beispielsweise über eine Kugelrollspindel mit Antrieb erfolgen kann. Beiden Balken 18 ist dabei ein getrennter Antrieb zugeordnet. Jeder Balken 18 besitzt an seinem freien Ende eine Führung 20, die in diesem Beispiel unter einem Winkel von 45° zum Balken 18 bzw. zur Bewegungsrichtung des Balkens 18 verläuft. An dieser Führung 20 ist ein Schlitten 21 in Richtung des Doppelpfeiles 22 verschiebbar gehalten, wobei die Verschiebung des Schlittens 21 über einen an sich bekannten, nicht dargestellten Antrieb erfolgt. An dem Schlitten 21 - es ist jeweils an dem oberen und dem unteren Balken 18 ein Schlitten 21 vorgesehen - befindet sich ein Werkzeugträger 23, der mit mehreren, unterschiedlichen Bearbeitungswerkzeugen 24 bestückt ist. Diese Bearbeitungswerkzeuge 24 werden von sogenannten Werkzeughaltern aufgenommen, die einstellbar, meist höheneinstellbar, am Werkzeugträger 23 gesichert sind. Damit ist es möglich, die einzelnen Bearbeitungswerkzeuge 24 des Werkzeugträgers 23 aus einer unwirksamen Position in eine Bearbeitungsposition zu bringen. Zusätzlich wird noch die Einstellung der Bearbeitungsposition der einzelnen Bearbeitungswerkzeuge 24 über den Schlitten 21 durchgeführt. Der eigentliche Arbeitshub der Bearbeitungswerkzeuge 24 erfolgt, in Abhängigkeit von der Art der Bearbeitung, durch Verschiebung des Balkens 18 und/oder der Werkzeughalter und/oder des Schlittens 21.

Bei der Bearbeitung des Rahmens 1 mit der Vorrichtung der Fig. 1 wird nun davon ausgegangen, dass der Schlitten 7 seine in der Fig. 1 dargestellte Lage einnimmt, alle Bearbeitungswerkzeuge 24 ihre Grundstellung einnehmen und sich der Balken 18 in einer zurückgezogenen Stellung befindet. Der Rahmen 1 wurde nun in Richtung des Pfeiles 25 mittels einer an sich bekannten, in der Zeichnung nicht enthaltenen Fördereinheit zugeführt und nimmt die gezeichnete Lage ein, in der er an einem Anschlag 17 anliegt. Diese Fördereinheit kann anhebbar ausgebildet sein, so dass sich der Rahmen 1 nur bei seinem Transport mit geringem Abstand oberhalb der Auflager 16 befindet. Mittels der nicht gezeichneten Spannelemente wird der Rahmen 1 gegen die Auflager 16 festgespannt. Jetzt wird das zunächst benötigte Bearbeitungswerkzeug 24 in seine Bearbeitungsposition gebracht und die entsprechende Bearbeitung des Rahmens 1 durchgeführt. Nach dieser Bearbeitung kehrt das Bearbeitungswerkzeug 24 in seine Ausgangslage zurück und das nächste Bearbeitungswerkzeug 24 wird aus seiner Grundstellung in die Arbeitsstellung bewegt und der Bearbeitungsvorgang wird durchgeführt. Sobald die entsprechende Ecke des Rahmens 1 bearbeitet wurde, wird die Spannung des Rahmens 1 aufgehoben. Der Anschlag 17, an dem der Rahmen 1 anliegt, wird abgesenkt, so dass der Rahmen 1 weiter in Richtung des Pfeiles 25 verschoben werden kann. Während dieser Verschiebung des Rahmens 1 wird der Schlitten 7 um 90° geschwenkt. Nun wird der andere Anschlag 17 angehoben und der Rahmen 1 entgegen der Richtung des Pfeiles 25 zurückbewegt, so dass er jetzt an dem anderen, angehobenen Anschlag 17 anliegt. Nach dem Festspannen des Rahmens 1 erfolgt die Bearbeitung in der gleichen Weise.

In dieser Stellung des Schlittens 7 verläuft die Führung 20 mit dem Schlitten 21 parallel zu einer Führungskante des Rahmens 1. In dieser Stellung kann die Schweißraupe des Kämpfers 5, die bei einem trapezförmigen Anschluß parallel zur Außenkante des Rahmens 1 verläuft, bearbeitet werden.

In Abänderung des erläuterten Ausführungsbeispieles der Fig. 1 ist es möglich, den Rahmen 1 nicht in der gezeichneten Lage zu bearbeiten. Es besteht nämlich auch die Möglichkeit, den Rahmen 1 in einer um 45° gedrehten Lage in eine Bearbeitungsposition einzuziehen. Dabei ist es jedoch erforderlich, dass der Schlitten 7 dann eine um 45° zur dargestellten Lage gedrehte Lage einnimmt.

In der Fig. 2 der Zeichnung sind zwei, spiegelbildlich zueinander angeordnete Vorrichtungen gemäß der Fig. 1 vorgesehen. Hier ist die in der Zeichnung obere Vorrichtung fest angeordnet, während die untere Vorrichtung entsprechend des Doppelpfeiles 26 verschoben werden kann. Damit ist diese Vorrichtung auf die Breite des Rahmens 1 einstellbar. Bei einer Anordnung gemäß der Fig. 2 können zwei benachbarte Ecken des Rahmens 1 gleichzeitig bearbeitet werden. Zusätzlich ist eine Fördereinheit 27 angedeutet, mit der der Rahmen 1 zwischen den beiden Vorrichtungen bewegt und in die jeweilige Bearbeitungsposition gebracht werden kann. Auch hier kann die Fördereinheit 27 während des Transportvorganges anhebbar ausgebildet sein. Dadurch wird vermieden, dass der Rahmen 1 auf den Auflagen schleift und beschädigt werden kann.

## Patentansprüche

1. Vorrichtung zum Bearbeiten der Schweißraupen an den Schweißstellen eines aus Kunststoffprofilen zusammengeschweißten Rahmens, insbesondere eines Fensterrahmens, bestehend aus einem Maschinengestell mit einem eine Führungsleiste für den Rahmen aufweisenden Transport- und Arbeitstisch, mindestens einem Anschlag mit mindestens einem den Rahmen in seiner Bearbeitungslage sichernden Spannelement sowie aus einem oberen und einem unteren, bewegbaren Werkzeugträger mit unterschiedlichen und in ihrer Bearbeitungslage einstellbaren Bearbeitungswerkzeugen,
**dadurch gekennzeichnet,**
**dass** in dem Maschinengestell mindestens eine horizontale und sich auf einem Kreisbogen über einen Winkel von mindestens 90° erstreckende Führung (6) ausgebildet ist, dass sich der Mittelpunkt der Kreisbogen-Führung (6) um ein vorgegebenes Maß innerhalb des Rahmens (1) in der Bearbeitungsstellung befindet, dass an der Führung (6) ein mittels eines Antriebes in einen Winkel von 45° bis 135° zu einer Führungskante des Rahmens (1) schwenkbarer Schlitten (7) gesichert ist und
**dass** der Schlitten (7) zumindest einen mit den Bearbeitungswerkzeugen (24) bestückten Werkzeugträger (23) radial zur Kreisbogen-Führung (6) verschiebbar aufnimmt.

2. Vorrichtung nach Anspruch 1,
**dadurch gekennzeichnet,**
**dass** der Antrieb für den Schlitten (7) aus zwei über eine kreisbogenförmig verlaufende Steuerbahn (10) anschaltbaren Kolbenzylindereinheiten (8,9) gebildet ist.

3. Vorrichtung nach Anspruch 2,
**dadurch gekennzeichnet,**
**dass** die Steuerbahn (10) aus mindestens zwei abtastbaren Steuerkurven (11) gebildet ist.

4. Vorrichtung nach mindestens einem der Ansprüche 1 bis 3,
**dadurch gekennzeichnet,**
**dass** der Schlitten (7) mindestens ein Auflager (16), mindestens einen Anschlag (17) und mindestens ein Spannelement für den Rahmen (1) aufweist.

5. Vorrichtung nach Anspruch 4,
**dadurch gekennzeichnet,**
**dass** der Anschlag (17) absenkbar ausgebildet ist.

6. Vorrichtung nach mindestens einem der Ansprüche 1 bis 5,
**dadurch gekennzeichnet,**
**dass** der Werkzeugträger (23) parallel zur Führungskante des Rahmens (1) am Schlitten (7) verschiebbar ist.

7. Vorrichtung nach mindestens einem der Ansprüche 1 bis 6,
**dadurch gekennzeichnet,**
**dass** die Führungsleiste (4) verstellbar ausgebildet ist.

## Claims

1. Device for machining the welding beads at the welds of a frame welded together from plastics profiles, especially a window frame, comprising a machine frame with a feed and work table having a guide bar for the frame, at least one stop having at least one clamping element securing the frame in its machining position, and an upper and a lower movable tool carrier having different machining tools adjustable in terms of their machining position, **characterized in that** in the machine frame there is configured at least one horizontal guide (6) extending in an arc over an angle of at least 90°, **in that** the midpoint of the arc-shaped guide (6) is located, in the machining setting, by a predefined measure within the frame (1), **in that** secured to the guide (6) there is a slide (7) which can be pivoted by means of a drive into an angle of 45° to 135° to a guide edge of the frame (1), and **in that** the slide (7) receives at least one tool carrier (23), equipped with the machining tools (24), such that it is displaceable radially to the arc-shaped guide (6).

2. Device according to Claim 1, **characterized in that** the drive for the slide (7) is formed from two piston cylinder units (8, 9) which can be switched on via a guideway (10) running in an arc shape.

3. Device according to Claim 2, **characterized in that** the guideway (10) is formed from at least two scannable control cams (11).

4. Device according to at least one of Claims 1 to 3, **characterized in that** the slide (7) has at least one bearing support (16), at least one stop (17) and at least one clamping element for the frame (1).

5. Device according to Claim 4, **characterized in that** the stop (17) is configured such that it can be lowered.

6. Device according to at least one of Claims 1 to 5, **characterized in that** the tool carrier (23) is displaceable on the slide (7) parallel to the guide edge of the frame (1).

7. Device according to at least one of Claims 1 to 6, **characterized in that** the guide bar (4) is configured such that it can be adjusted.

## Revendications

1. Dispositif de traitement des bavures de soudage au niveau des points de soudage d'un cadre formé à partir de profilés en matière plastique connectés par soudage, notamment d'un cadre de fenêtre, se composant d'un bâti de machine avec une table de transport et de travail présentant une glissière pour le cadre, d'au moins une butée avec au moins un élément de serrage fixant le cadre dans sa position de traitement ainsi que d'un porte-outil supérieur et d'un porte-outil inférieur déplaçables avec différents outils de traitement de position de traitement ajustable,
**caractérisé en ce qu'**
au moins une coulisse (6) horizontale et s'étendant sur un arc de cercle suivant un angle d'au moins 90° est réalisée dans le bâti de machine, **en ce que** le centre de la coulisse en arc de cercle (6) se trouve dans la position de traitement suivant une mesure prédéfinie à l'intérieur du cadre (1), **en ce qu'**un chariot (7) pouvant pivoter au moyen d'un entraînement suivant un angle de 45° à 135° par rapport à une arête de guidage du cadre (1) est fixé sur la coulisse (6) et **en ce que** le chariot (7) reçoit au moins un porte-outil (23) équipé des outils de traitement (24) de manière déplaçable radialement par rapport à la coulisse en arc de cercle (6).

2. Dispositif selon la revendication 1,
**caractérisé en ce que**
l'entraînement pour le chariot (7) est formé de deux unités de cylindre de piston (8, 9) pouvant être raccordées par le biais d'une piste de commande (10) s'étendant suivant une forme en arc de cercle.

3. Dispositif selon la revendication 2,
**caractérisé en ce que**
la piste de commande (10) est formée d'au moins deux courbes de commande balayables (11).

4. Dispositif selon au moins l'une quelconque des revendications 1 à 3,
**caractérisé en ce que**
le chariot (7) présente au moins un support (16), au moins une butée (17) et au moins un élément de serrage pour le cadre (1).

5. Dispositif selon la revendication 4,
**caractérisé en ce que**
la butée (17) est réalisée de manière abaissable.

6. Dispositif selon au moins l'une quelconque des revendications 1 à 5,
**caractérisé en ce que**
le porte-outil (23) peut être déplacé sur le chariot (7) parallèlement à l'arête de guidage du cadre (1).

7. Dispositif selon au moins l'une quelconque des revendications 1 à 6,
**caractérisé en ce que**
la glissière (4) est réalisée de manière variable.
